# EUROPÄISCHE PATENTANMELDUNG

(11) **EP 2 690 926 A1**
(43) Veröffentlichungstag der Anmeldung: **29.01.2014**
(21) Anmeldenummer: 13002946.5
(22) Anmeldetag: 07.06.2013
(51) Int. Cl.: H05B 6/36, C21D 1/10, H05B 6/38, H05B 6/40

(54) **Induktor**

(30) Priorität: 25.07.2012 DE 102012014765
(71) Anmelder: EFD Induction GmbH, 79106 Freiburg (DE)
(72) Erfinder: Beringer, Alfred, 79427 Eschbach (DE); Eckert, David, 79189 Bad Krozingen (DE); Kaltenbach, Daniel, 79238 Ehrenkirchen (DE); Stiele, Dr. Hansjürg, 79112 Freiburg (DE)
(74) Vertreter: Goy, Wolfgang

(57) **Zusammenfassung**

Ein Induktor zum induktiven Härten von metallischen Werkstücken weist eine Mäanderform auf, wobei sich mindestens drei erste Induktorabschnitte 3 in Richtung der Längsachse des zu härtenden Werkstücks erstrecken und wobei zweite Induktorabschnitte 4 die Enden der ersten Induktorabschnitte wechselweise miteinander verbinden.

## Beschreibung

Die Erfindung betrifft einen Induktor zum induktiven Härten von metallischen Werkstücken.

Das besondere Anwendungsgebiet der Erfindung ist das induktive Härten von metallischen Werkstücken, welche - im allgemeinsten Sinne - eine Mittellängsachse besitzen und deren Umfangsmantelfläche im Sinne einer Außenhärtung induktiv gehärtet werden soll. Gleichermaßen kann das metallische Werkstück - im allgemeinsten Sinne - eine Innenausnehmung mit Mittellängsachse besitzen, welche im Sinne einer Innenhärtung induktiv gehärtet werden soll. Der erfindungsgemäße Induktor ist somit sowohl zum Härten einer Außenmantelfläche als auch zum Härten einer Innenmantelfläche geeignet.

Konventionelle Induktoren (Gesamtflächen- oder Linieninduktoren) weisen zwei Leiter auf, welche in Wechselwirkung mit dem zu härtenden Werkstück treten. Ein Beispiel sind die sogenannten Haarnadelinduktoren, welche im Wesentlichen U-förmig ausgebildet sind und eine relativ große Längserstreckung besitzen.

Nachteilig bei diesen konventionellen Induktoren ist die geringe Überdeckung zwischen den dem Werkstück zugewandten Induktorflächen und der Oberfläche des zu härtenden Werkstücks bei Rotation. Daher sind hohe Umdrehungsgeschwindigkeiten notwendig. Weiterhin ist bedingt durch die geringe Überdeckung der Induktor-Äste zur Werkstückoberfläche eine hohe Leistung notwendig. Bei längsverzahnten Werkstücken oder Werkstücken mit Spindeln bzw. (trapezförmigen) Gewinden ist die magnetische Flußrichtung vollständig oder abschnittsweise parallel zur Funktionsfläche. Dies ist ungünstig. Denn es wird ein Magnetfeld erzeugt, welches für das induktive Härten nicht optimal ist.

Davon ausgehend liegt der Erfindung die Aufgabe zugrunde, einen induktor zum induktiven Härten von metellischen Werkstücken zu schaffen, mittels welchem Werkstücke insbesondere mit profilierten Flächen besser gehärtet werden können.

Die technische lösung ist gekenzeichnet durch die Merkmale des Anspruchs 1.

Der Kerngedanke des erfindungsgemäßen Induktors zum induktiven Härten von metallischen Werkstücken liegt darin, daß dieser Induktor im weitesten Sinne in der Art eines Korbes mäanderförming ausgebildet ist. Dieser korbartige Induktor umschließt dabei bei einer Außenhärtung das zu härtende Werkstück bzw. füllt bei einer Innenhärtung den Innenraum des Werkstücks aus. Dabei weist der Induktor mindestens drei erste Induktorabschnitte auf, welche sich - im allgemeinsten Sinne - in Richtung der Längsachse des zu härtenden Werkstücks bzw. des Induktors erstrecken. Es ist dabei nicht notwendig, daß sich diese ersten Induktorabschnitte exakt parallel zu dieser Längsachse erstrecken. Es ist gleichermaßen denkbar, daß die ersten Induktorabschnitte bezüglich der Längsachse sich konisch und/oder schräg verlaufen. Die Mittellängsachse des zu härtenden Werkstücks entspricht dabei der Mittelachse des Induktors. Der Vorteil des erfindungsgemäßen mäanderförmigen Induktors besteht darin, daß der Überdeckungsgrad von Werkstück und Induktor hoch ist, da mehrere Leiterabschnitte in Wechselwirkung mit der Werkstückoberfläche stehen. Daraus resultiert auch eine Verringerung der Umrichterleistung gegenüber einem Gesamtflächeninduktor aus zwei Leitern. Auch zeichnet sich der erfindungsgemäße Induktor durch eine geringere Belastung durch den Strom aus. Erreicht wird dies beim erfindungsgemäßen mäanderförmigen Induktor durch Drehung des magnetischen Flusses. Dies ist insbesondere vorteilhaft bei Gewinden oder Verzahnungen. Wie bereits ausgeführt, kann der erfindungsgemäße mäanderförmige Induktor sowohl für eine Innenhärtung als auch für eine Außenhärtung verwendet werden.

Gemäß der Weiterbildung in Anspruch 2 ist der Verlauf der ersten Induktorabschnitte an die in Richtung der Längsachse sich erstreckende Kontur des Werkstücks angepaßt. Letztendlich bedeutet dies, daß die ersten Induktorabschnitte einen gleichbleibenden Abstand zu der Oberflächenkontur des Werkstücks besitzen. Bei einem zylindrischen Werkstück sind somit die ersten Induktorabschnitte parallel zur Längsmittelachse ausgerichtet. Bei anderen Werkstückformen können die ersten Induktorabschnitte konisch, schräg, gebogen etc. verlaufen.

Die Weiterbildung gemäß Anspruch 3 schlägt zwei grundsätzliche Aufbauarten des induktors vor. Zum einen können die Mäander als einzige Schale ausgebildet sein. Dies bedeutet, daß an einer Stelle der Strom zugeführt und an einer anderen Stelle der Strom abgeführt wird, wobei sämtliche Induktorleiter mit dem Strom durchflossen werden. Zum anderen kann der Induktor aber auch durch zwei Halbschalen gebildet sein, welche jeweils eine eigene Stromversorgung aufweisen.

Schließlich schlägt die Weiterbildung gemäß Anspruch 4 vor, daß die ersten Induktorabschnitte Magnetfeldkonzentratoren bzw. Feldführungselemente aufweisen. Diese nehmen gezielt Einfluß auf den Verlauf und die Ausbildung des Magnetfeldes. Dadurch kann das Härteergebnis noch weiter verbessert werden.

Zwei Ausführungsbeispiele eines erfindungsgemäßen Induktors zum induktiven Härten eines metallischen Werkstücks werden nachfolgend anhand der Zeichnungen beschrieben. In diesen zeigt:
- Fig. 1: verschiedene Ansichten einer ersten Ausführungsform des Induktors;
- Fig. 2: eine perspektivische Ansicht des Induktors in Fig. 1;
- Fig. 3: der Induktor in Fig. 2 mit Magnetfeldkonzentratoren;
- Fig. 4: verschiedene Ansichten einer zweiten Ausführungsform des Induktors;
- Fig. 5: eine perspektivische Ansicht des Induktors in Fig. 4;
- Fig. 6: der Induktor in Fig. 5 mit Magnetfeldkonzentratoren.

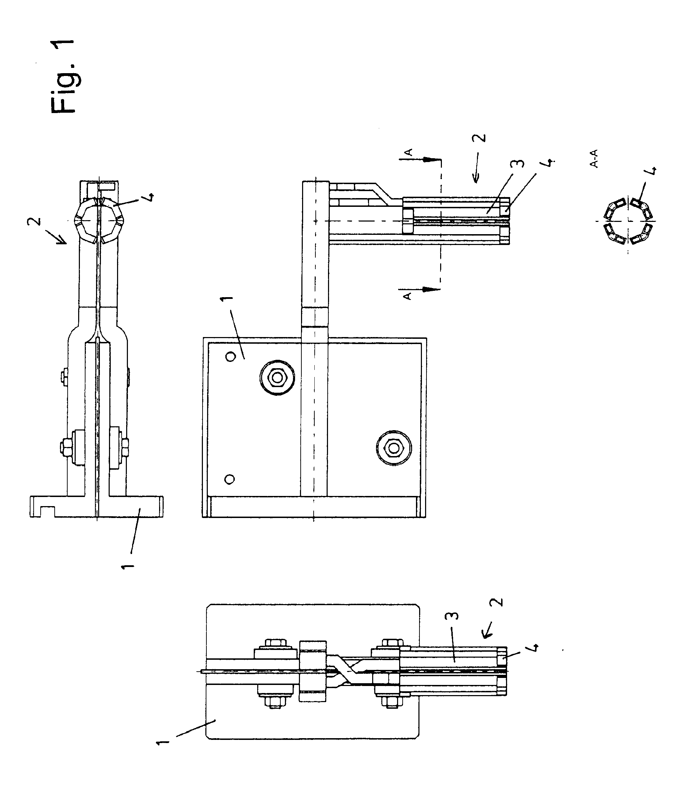

Der in den Fig. 1 bis 3 dargestellte, an einem Induktoranschluß 1 angeordnete Induktor 2 der ersten Ausführungsform ist - allgemein - zylinderförmig ausgebildet. Die Induktorabschnitte besitzen dabei einen mäanderförmigen Verlauf.

Konkret sind erste Induktorabschnitte 3 vorgesehen, welche sich auf der gedachten Zylindermantelfläche parallel zur Längsmittelachse des Induktors 2 erstrecken. Endseitig sind diese ersten Induktorabschnitte 3 wechselweise durch zweite Induktorabschnitte 4 miteinander verbunden. Die Induktorabschnitte 3, 4 bilden somit in ihrer Gesamtheit ein korbähnliches Gebilde.

Im dargestellten Ausführungsbeispiel kann der Induktor 1 für eine Innenhärtung in eine entsprechende Ausnehmung des zu härtenden Werkstücks eingeführt werden. Aufgrund der ersten Induktorabschnitte 3 ergibt sich ein hoher Überdeckungsgrad, da mehrere Leiter in Wechselwirkung mit der Werkstückoberfläche stehen.

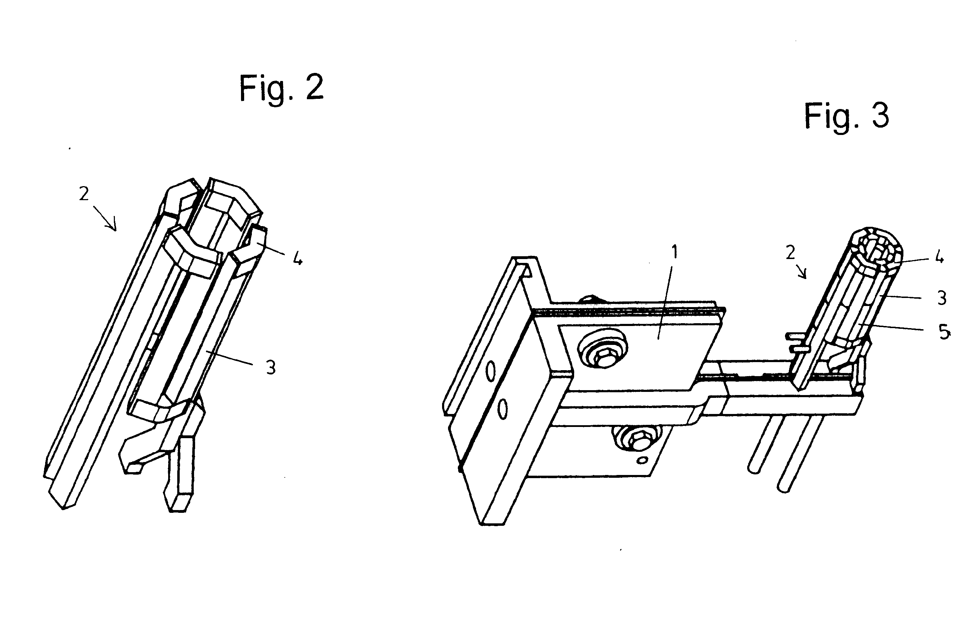

Fig. 3 zeigt eine Weiterentwicklung dahingehend, daß die ersten Induktorabschnitte 3 mit Magnetfeldkonzentratoren 5 bestückt sind. Mit diesen kann das Magnetfeld beeinflußt werden.

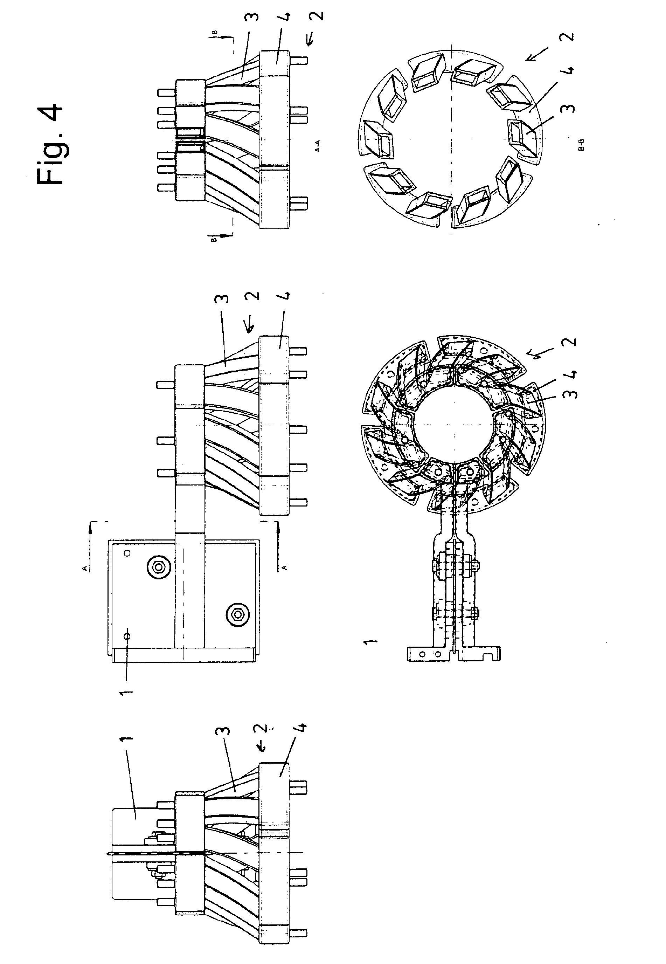

Die zweite Ausführungsform der Fig. 4 bis 6 geht vom gleichen Prinzip aus. Dies bedeutet, daß der Induktor 2 mäanderförmig ausgebildet ist und erste Indurabschnitte 3 sowie zweite Induktorabschnitte 4 aufweist. Der Unterschied zu der ersten Ausführungsform besteht darin, daß die ersten Induktorabschnitte 3 bezüglich der Längsachse konisch sowie weiterhin schräg verlaufen. Außerdem sind die ersten Induktorabschnitte 3 leicht gebogen.

Dieser Induktor 2 der zweiten Ausführungsform dient der Außenhärtung eines metallischen Werkstücks, indem der Induktor 2 über das Werkstück gestülpt wird.

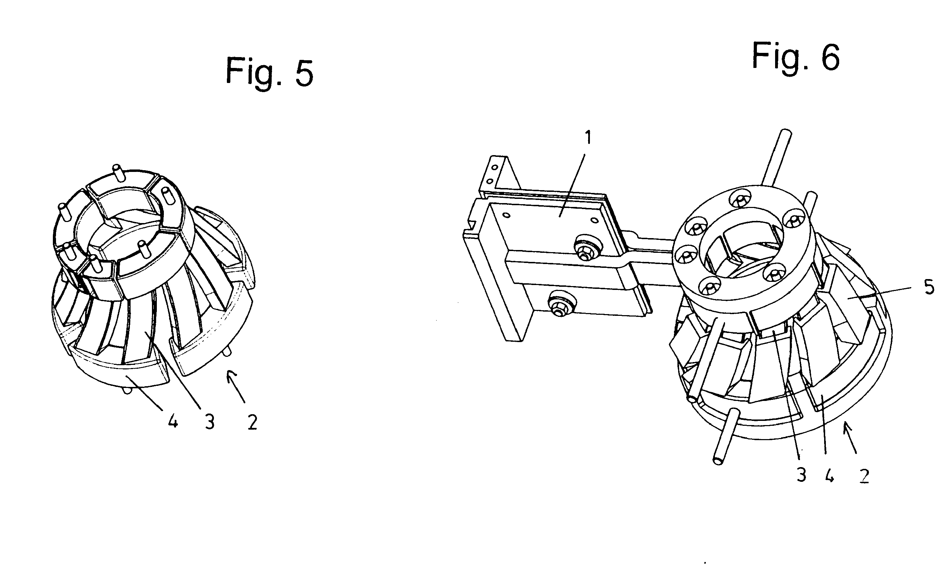

Die Ausführungsvariante in Fig. 6 zeigt schließlich noch die Bestückung der ersten Induktorabschnitte 3 mit Magnetfeldkonzentratoren 5 zur Beeinflussung des Magnetfeldes.

### Bezugszeichenliste

- 1: Induktoranschluß
- 2: Induktor
- 3: erster Induktorabschnitt
- 4: zweiter Induktorabschnitt
- 5: Magnetfeldkonzentrator

## Patentansprüche

1. Induktor (1) zum induktiven Härten von metallischen Werkstücken,
mit mindestens drei ersten Induktorabschnitten (3), welche sich in Richtung der Längsachse des zu härtenden Werkstücks erstrecken, und
mit zweiten Induktorabschnitten (4), welche die Enden der ersten Induktorabschnitte (3) derart wechselweise miteinander verbinden,
daß die ersten und zweiten Induktorabschnitte (3, 4) des Induktors (1) mäanderförmig um die Längsachse des zu härtenden Werkstücks herum in der Art eines Korbes verlaufen.

2. Induktor nach dem vorhergehenden Anspruch,
**dadurch gekennzeichnet,**
**daß** der Verlauf der ersten Induktorabschnitt (3) an die in Richtung der Längsachse sich erstreckende Kontur des Werkstücks angepaßt ist.

3. Induktor nach einem der vorhergehenden Ansprüche,
**dadurch gekennzeichnet,**
**daß** der Induktor einteilig oder aus zwei Halbschalen gebildet ist.

4. Induktor nach einem der vorhergehenden Ansprüche,
**dadurch gekennzeichnet,**
**daß** die ersten Induktorabschnitte (3) Magnetfeldkonzentratoren (5) aufweisen.
